(19) **Europäisches Patentamt**
**European Patent Office**
**Office européen des brevets**

(11) **EP 1 784 038 B1**

(12) **EUROPEAN PATENT SPECIFICATION**

(45) Date of publication and mention
of the grant of the patent:
**23.05.2012 Bulletin 2012/21**

(51) Int Cl.:
***H04W 72/10*** (2009.01)

(21) Application number: **06023054.7**

(22) Date of filing: **06.11.2006**

(54) **Method for requesting and allocating uplink resources in a wireless communication system for supporting a real-time service**

Verfahren zur Zuordnung von Aufwärtsstrecke-Resourcen für einen Echtzeitdienst in einem drahtlosen Kommunikationssystem

Méthode d'attribution des ressources de liaison montante pour un service en temps réel dans un système de communication sans fil

(84) Designated Contracting States:
**DE FR GB IT SE**

(30) Priority: **05.11.2005 KR 20050105756**

(43) Date of publication of application:
**09.05.2007 Bulletin 2007/19**

(73) Proprietor: **Samsung Electronics Co., Ltd.**
**Suwon-si, Gyeonggi-Do (KR)**

(72) Inventors:
• **Park, Chi-Hyun**
**Suwon-si**
**Gyeonggi-do (KR)**
• **Cheon, Jung-Hoon**
**Suwon-si**
**Gyeonggi-do (KR)**
• **Cho, Sung-Hyun**
**Suwon-si**
**Gyeonggi-do (KR)**
• **Park, Won-Hyoung**
**Suwon-si**
**Gyeonggi-do (KR)**
• **Lee, Ok-Seon**
**Suwon-si**
**Gyeonggi-do (KR)**

(74) Representative: **Grünecker, Kinkeldey,**
**Stockmair & Schwanhäusser**
**Leopoldstrasse 4**
**80802 München (DE)**

(56) References cited:
• **"Part 16: Air Interface for Fixed and Mobile Broadband Wireless Access Systems Amendment for Physical and Medium Access Control Layers for Combined Fixed and Mobile Operation in Licensed Bands" DRAFT IEEE STANDARD FOR LOCAL AND METROPOLITAN AREA NETWORKS,, [Online] no. IEEE P802.16e/D12, 14 October 2005 (2005-10-14), pages 1-684, XP007908626 Retrieved from the Internet: URL:http://ieeexplore.ieee.org/stamp/stamp D.jsp?arnumber=4039742&isnumber =4039741>**
• **ANONYMOUS ED - ANONYMOUS: "IEEE Standard for Local and Metropolitan Area Networks Part 16: Air Interface for Fixed Broadband Wireless Access Systems" IEEE STANDARD; [IEEE STANDARD], IEEE, PISCATAWAY, NJ, USA, 1 January 2004 (2004-01-01), pages _1-857, XP017600973 ISBN: 978-0-7381-4070-4**

Description

**BACKGROUND OF THE INVENTION**

**1. Field of the Invention**

The present invention relates to a method for allocating uplink resources in a wireless communication system for supporting a real-time service, and more particularly to a method for allocating uplink resources to control packet transmission.

**2. Description of the Related Art**

Wireless communication systems provide various services using limited resources. A scheduling scheme is needed which can efficiently utilize the resources. In an ideal scheduling scheme, unnecessarily allocated resources are quickly collected and the collected resources are re-allocated to a necessary service. Further, the resources should be able to be quickly allocated in response to a resource allocation request.

Various uplink (UL) scheduling schemes have been proposed for voice over Internet protocol (VoIP) services based on an Internet protocol (IP) network in a wireless access system for allocating resources in response to a user request as in a conventional Institute of Electrical and Electronics Engineers (IEEE) 802.16 standard based system. For example, there are an Unsolicited Grant Service (UGS), real-time Polling Service (rtPS) and extended real-time Polling Service (ertPS).

In the UGS scheme, UL resources of a fixed size are allocated in response to a user request. Thus, a user transmits desired data to a base station (BS) using the UL resources of the fixed size. In the rtPS scheme, necessary resources are allocated in response to a periodic UL resource allocation request of the user. Thus, the user transmits data using the resources appropriately allocated according to amount of data to be transmitted.

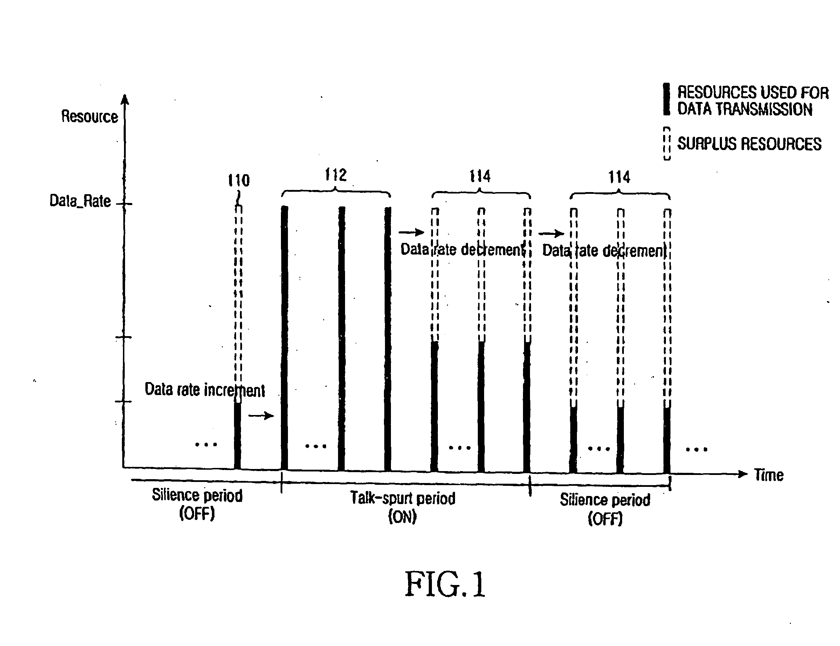

FIG 1 illustrates a procedure for scheduling UL resources in the conventional UGS scheme of prior art.

Referring to FIG 1, a subscriber station (SS) transmits a data packet using the same resource (Data_Rate) in ON or talk-spurt periods 112 and 114 in which the data packet to be transmitted is present. Surplus resources may occur according to the amount of packet data to be transmitted. The SS uses only minimal resources needed to maintain the associated service in OFF or silence periods 110 and 116 in which data to be transmitted is absent.

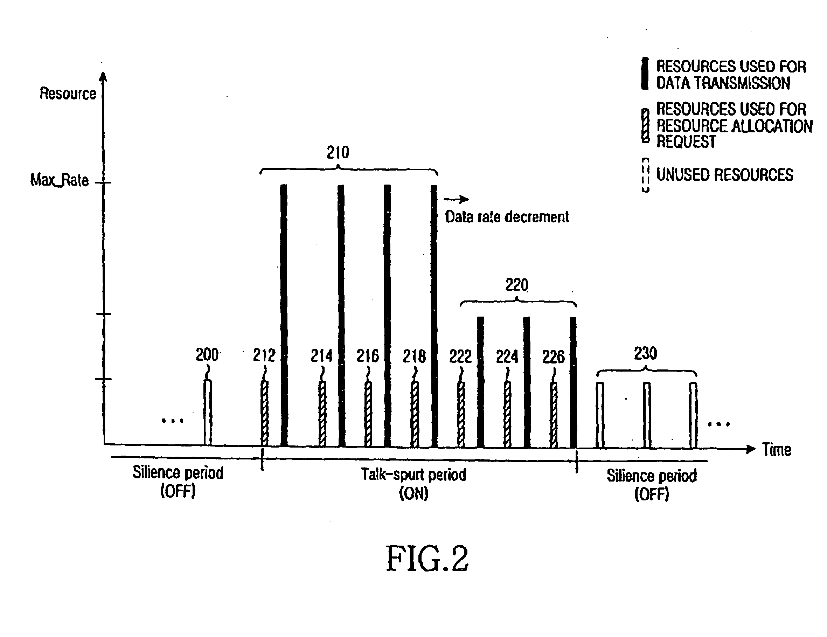

FIG. 2 illustrates a procedure for scheduling UL resources in the conventional rtPS scheme of prior art.

Referring to FIG 2, an SS sends a resource allocation request to a BS so that the SS can be assigned UL resources (as indicated by reference numerals 212 to 226). The SS sets an amount of resources to be requested by taking into consideration an amount of packet data to be transmitted. The BS allocates the UL resources requested by the SS. The SS transmits data packets using the resources allocated from the BS (as indicated by reference numerals 210 and 220).

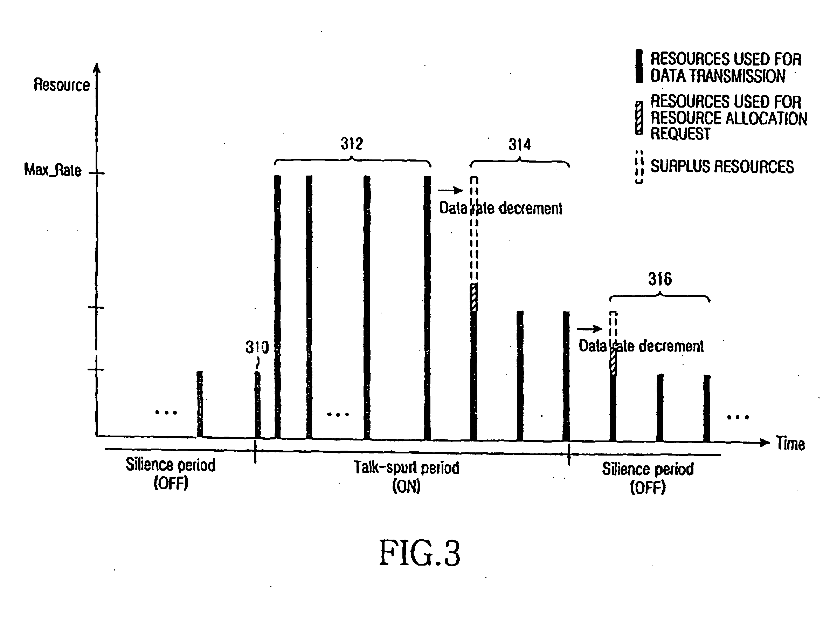

FIG 3 illustrates a procedure for scheduling UL resources in the conventional ertPS schemeof prior art.

Referring to FIG 3, an SS sends a resource allocation request to a BS when a change from an OFF period to an ON period is made (as indicated by reference numeral 310). The resource allocation request uses a bandwidth request header. When receiving the bandwidth request header, the BS periodically allocates resources for a data packet transmission of the SS. The SS transmits data using the allocated resources (as indicated by reference numeral 312).

When a data rate change is required in a situation in which a data packet is transmitted, the SS transmits data at a changed data rate in the next transmission period. The changed data rate is less than a previously used data rate. The SS sends information for notifying the BS that the data rate has been changed using a grant management subheader. The SS can continuously transmit a data packet at the changed data rate (as indicated by reference numeral 314).

A situation in which the SS transmits a special control message may occur when a data packet is transmitted using one of the above-described UL scheduling schemes. Another connection different from a currently connected traffic channel may be needed. For example, a handoff situation may occur. When the handoff situation occurs, the SS sends, to the BS, a resource allocation request for a control message transmission. Conventionally, the size of the control message is several ten times to several hundred times greater than that of a real-time data packet.

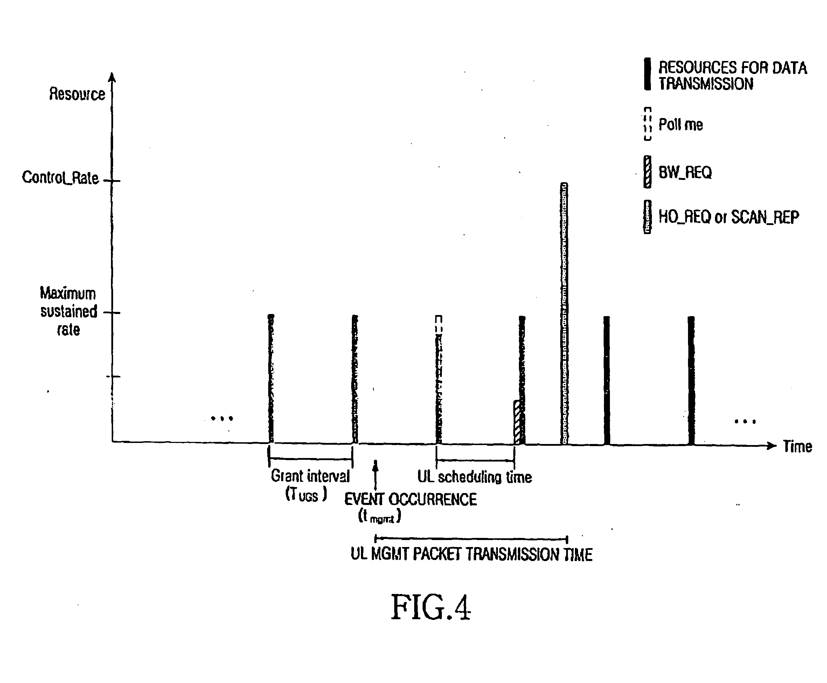

FIG 4 illustrates an example of allocating UL resources for a control packet transmission in the conventional UGS scheme of prior art. In FIG 4, it is assumed that the time required for allocating resources in response to a resource allocation or bandwidth (BW) request of an SS is regular and packet error does not occur.

Referring to FIG 4, the SS transmits a data packet using data traffic resources (or resources allocated for a data packet transmission) at a grant interval $T_{UGS}$. When an event occurs, the SS transmits identification information for notifying that a resource allocation request will be made at a first data packet transmission time after an event occurrence time $t_{mgmt}$. The event can be a situation in which a control message transmission is required like a handoff request situation and so on. The identification information is recorded in a poll me (PM) field of a grant management subheader. The grant management subheader is transmitted using part of the data traffic resources. The identification information also has information about a resource allocation request for a different connection.

The BS can know that the resource allocation request will be made from the SS by detecting the identification information recorded in the PM field of the grant management subheader. The BS allocates resources needed to transmit the resource allocation request for the different connection from the SS. The BS allocates the resources needed to transmit a bandwidth request and UL transmit power report header.

Although not illustrated in FIG 4, a UL scheduling time takes place from the time at which the identification information is transmitted to the time at which resources are allocated for the resource allocation request. For convenience of explanation, it is assumed that the UL scheduling time is less than the grant interval for a real-time data packet transmission.

The SS makes a control traffic resource allocation request BW_REQ using resources allocated from the BS within the grant interval TUGS between a packet data transmission time at which the identification information is transmitted and the next packet data transmission time. Control traffic resources are used to transmit the control message. The resource allocation request is transmitted in a bandwidth request (BR) field of the bandwidth request and UL transmit power report header. A UL scheduling time takes place from the time at the identification information is transmitted to the time at which the control traffic resource allocation is requested.

When receiving the resource allocation request BW_REQ from the SS, the BS allocates the control traffic resources. The SS transmits a desired control message (or UL mgmt message) using the control traffic resources allocated from the BS. The control message is transmitted between first and second data packet transmission and after the control traffic resource allocation request. The control message may be an HO_REQ message for requesting a handoff or a SCAN_REP message for reporting the measured strength of a signal received from an adjacent BS.

The time required to transmit the control message or a UL mgmt packet transmission time $D_{mgmt\_tx}$ can be computed using the time $t_{mgmt}$ at which the event occurs and the time at which the control message transmission is completed.

Until the SS using the UGS scheme is assigned the resources after making the resource allocation request, a time of about 3~4 frames (or 15 ~ 20 msec) is required. A minimum time of about 6 frames (or 30 msec) is required until the resources are allocated from the event occurrence time. This is a relatively large value when a handoff time of 50 ~ 60 msec is required.

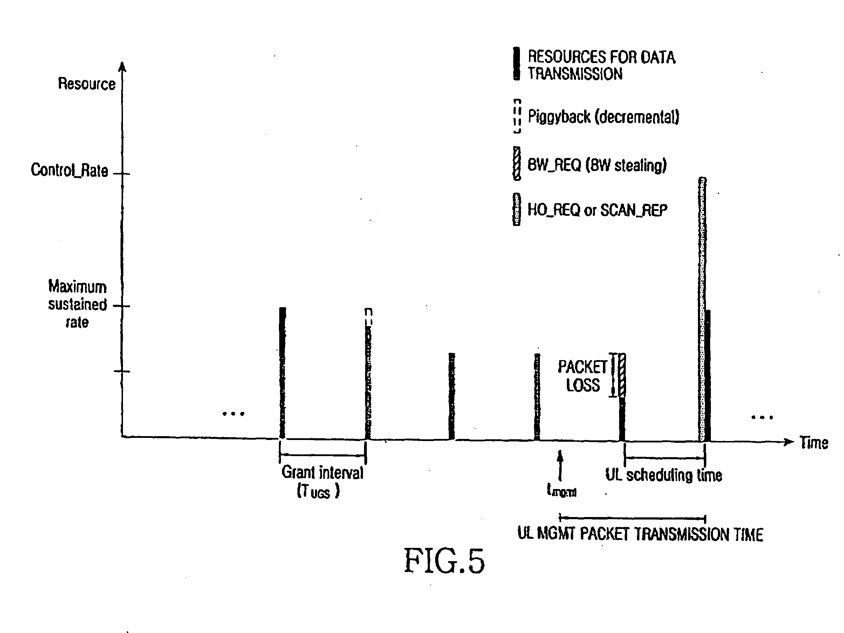

FIG 5 illustrates an example of allocating UL resources for a control packet transmission in the conventional ertPS scheme. In FIG 5, it is assumed that the time required for allocating resources in response to a resource allocation or BW request of an SS is regular and packet error does not occur.

Referring to FIG 5, the SS transmits a data packet using data traffic resources (or resources allocated for a data packet transmission) at a grant interval $T_{ertPS}$. When an event occurs, the SS makes a control traffic resource allocation request BW_REQ at a first data packet transmission time after an event occurrence time $t_{mgmt}$. The event can be a situation in which a control message transmission is required like a handoff situation. The resource allocation request is transmitted in the BR field of the bandwidth request and UL transmit power report header.

When receiving the resource allocation request BW_REQ from the SS, the BS allocates the control traffic resources. The SS transmits a desired control message (or UL mgmt message) using the control traffic resources allocated from the BS. The control message is transmitted between first and second data packet transmission times after the control traffic resource allocation request. The control message may be an HO_ REQ message for requesting a handoff or a SCAN_REP message for reporting the measured strength of a signal received from an adjacent base station. AUL scheduling time takes place from the time at which the resource allocation is requested to the time at which the control message transmission is completed.

Referring to the above description, a time required to transmit the control message or a UL mgmt packet transmission time $D_{mgmt\_tx}$ can be computed using the time $t_{mgmt}$ at which an event occurs and the time at which the control message transmission is completed.

Until the SS using the ertPS scheme is assigned the resources from the event occurrence time, a minimum time of about 3 frames (or 15 msec) is required. This is a relatively large value when a handoff time of 50 - 60 msec is required. When a resource allocation request is made using data traffic resources in the case of the ertPS scheme, transmission loss of a data packet may occur. This results in data packet transmission delay.

In the conventional UL scheduling schemes, UL resources for transmitting a control message are not quickly allocated. When a packet retransmission is requested due to a bad channel state while a handoff for the SS is performed, a handoff initialization time increases and a probability that handoff error occurs increases.

A scheme for requesting resources to be used for a different connection through a ranging process has not been described above because a resource allocation time for a resource allocation request increases when the resource allocation request is attempted through the ranging process. However, when the ranging process is used, data packet loss occurring in the ertPS scheme can be prevented.

## SUMMARY OF THE INVENTION

A new UL scheduling method is needed which can maximally and quickly transmit a sporadically generated control message in a wireless communication system for providing a real-time service.

Therefore, the present invention provides a resource allocation method that can quickly process an urgent control message in a wireless communication system for supporting a real-time service.

Moreover, the present invention provides an uplink resource allocation method that can reduce a resource allocation time for a control message transmission in a wireless communication system for supporting a real-time service.

Moreover, the present invention provides a resource allocation method that can allocate resources for a control message transmission without loss of resources allocated for a packet data transmission in a wireless communication system for supporting a real-time service.

In accordance with an aspect of the present invention, there is provided a method for requesting and allocating uplink resources for a subscriber station in a wireless communication system, that includes transmitting a data packet using data traffic resources; transmitting information about a desired resource amount and an identifier for identifying a control traffic resource allocation request for a control message transmission when a first data packet transmission time is reached and after a control message to be transmitted is generated; receiving allocated control traffic resources; and transmitting the control message using the allocated control traffic resources.

In accordance with another aspect of the present invention, there is provided a method for allocating uplink resources in a base station of a wireless communication system, that includes receiving a data packet from a subscriber station in an uplink data transmission period; receiving an identifier for identifying a control traffic resource allocation request for transmitting a control message and information about a desired resource amount, along with the data packet; allocating control traffic resources according to the information about the desired resource amount; and receiving the control message transmitted using allocated control traffic resources.

In accordance with yet another aspect of the present invention, there is provided a method for allocating uplink resources in a wireless communication system, that includes transmitting a data packet using data traffic resources; receiving a data packet transmitted from the subscriber station in an uplink period allocated by a base station; transmitting information about a desired resource amount and an identifier for identifying a control traffic resource allocation request for a control message transmission when a first data packet transmission time is reached after the subscriber station generates a control message to be transmitted; receiving, by a base station, the identifier and the information about the desired resource amount along with the data packet from the subscriber station; allocating, by the base station, control traffic resources according to the information about the desired resource amount; and transmitting the control message from the subscriber station using the allocated control traffic resources.

## BRIEF DESCRIPTION OF THE DRAWINGS

The above and other features and advantages of the present invention will be more clearly understood from the following detailed description taken in conjunction with the accompanying drawings, in which:

FIG 1 illustrates a procedure for scheduling uplink resources in a conventional Unsolicited Grant Service (UGS) scheme;

FIG 2 illustrates a procedure for scheduling uplink resources in a conventional real-time Polling Service (rtPS) scheme;

FIG 3 illustrates a procedure for scheduling uplink resources in a conventional extended real-time Polling Service (ertPS) scheme;

FIG 4 illustrates an example of allocating uplink resources for a control packet transmission in the conventional UGS scheme;

FIG 5 illustrates an example of allocating uplink resources for a control packet transmission in the conventional ertPS scheme;

FIG 6 illustrates an example of allocating uplink resources for a control packet transmission in a UGS scheme in accordance with the present invention; and

FIG 7 illustrates an example of allocating uplink resources for a control packet transmission in an ertPS scheme in accordance with the present invention.

## DETAILED DESCRIPTION OF THE PREFERRED EMBODIMENTS

Preferred embodiments of the present invention will be described in detail herein below with reference to the accompanying drawings. In the following description, detailed descriptions of functions and configurations incorporated herein that are well known to those skilled in the art are omitted for clarity and conciseness.

The present invention provides a new format of a grant management subheader in which a piggyback request conventionally used only for the same connection can be used also for a different connection. Further, a resource allocation request for the different connection can be made using the newly proposed grant management subheader. When the resource allocation request for a new connection is made using the grant management subheader, a resource allocation time can be reduced and also loss of resources allocated for an existing connection can be minimized.

The format of the new grant management subheader for use in an uplink (UL) resource allocation method of the present invention will be described.

A field for recording identification information should be added to make a resource allocation request for a different connection (or a basic connection identifier (CID)) using the grant management subheader conventionally used only for the same connection (or a transport CID (TCID)). Thus, a request for connection (RFC) field is added to the newly proposed grant management subheader. The RFC field should be added according to an uplink (UL) scheduling method. The newly proposed grant management subheader is provided with a piggyback request field in which information about an amount of desired UL resources is recorded in relation to each RFC field.

Table 1 shows an example of the format of the newly proposed grant management subheader.

Table 1

| Syntax | Size (bit) | Notes |
|---|---|---|
| Grant Management Subheader{ | | |
| If (scheduling service type =UGS){ | | |
| SI | 1 | |
| PM | 1 | |
| FLI | 4 | |
| FL | 1 | |
| RFC | 1 | |
| Piggyback request | $8 + \alpha$ | Byte unit |
| }else if(scheduling service type = extended rtPS){ | | |
| Extended Piggyback request | $11 \rightarrow 10 + \alpha$ | |
| FLI | 4 | |
| FL | 1 | |
| RFC | 1 | |
| } else{ | | |
| RFC | 1 | |
| Piggyback request | $16 \rightarrow 15 + \alpha$ | |
| } | | |
| } | | |

Referring to Table 1, the 1-bit RFC field and the 8-bit piggyback request field are provided in an unsolicited grant service (UGS) scheme. The 1-bit RFC field and the 11-bit extended piggyback request field are provided in an extended real-time polling service (ertPS) scheme. The 1-bit RFC field and the 15-bit piggyback request field are provided for a non-real-time service user.

In Table 1, the 1-bit RFC field is implemented in each UL scheduling method. The present invention only considers the TCID mapped to the current connection and the basic CID mapped to the different connection. When other types of CIDs, for example, primary and secondary CIDs, etc., are additionally considered, the number of bits of the RFC fields whose number is equal to the number of CID types to be considered can be adjusted, or a field for identifying a CID type can be added. When the field for identifying the CID type is added to the grant management subheader, the RFC field can be fixed to one bit.

In Table 1, a size of the piggyback request mapped to each UL scheduling method is defined under an assumption that a size of the grant management subheader is 3 bytes. However, when the grant management subheader size increases, the size of the piggyback request field can be newly defined. In this case, Table 1 shows that the size of the piggyback request field can increase.

In the conventional grant management subheader, the piggyback request field is absent in the UGS scheme. Thus, a reserved field conventionally used is removed from the newly proposed grant management subheader. The RFC field and the piggyback request field are added in place of the reserved field.

An operation in which UL resources are allocated for a different connection through the UL scheduling proposed in the present invention will be described in detail with reference to the accompanying drawings.

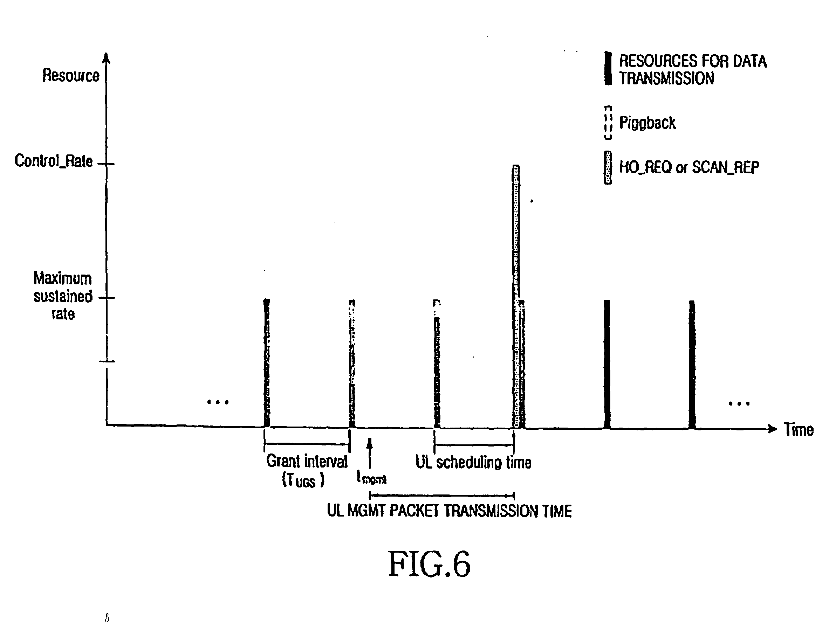

FIG 6 illustrates an example of allocating uplink resources for a control packet transmission in the UGS scheme in accordance with the present invention. In FIG 6, it is assumed that a time required to allocate resources in response to a resource allocation or bandwidth (BW) request of a subscriber station (SS) is regular and packet error does not occur.

Referring to FIG 6, the SS transmits a data packet using fixed data traffic resources (or resources allocated for a data packet transmission) at a grant interval $T_{UGS}$. When an event occurs, the SS makes a resource allocation request for a different connection through a grant management subheader at a first data packet transmission time after an event occurrence time $t_{mgmt}$. A value of 1 is recorded in the RFC field mapped to the UGS scheme in the grant management subheader. The value of 1 recorded in the RFC field is an identifier for identifying the resource allocation request for the different connection. The SS records information about an amount of resources needed to transmit a control message for the different connection in the piggyback request field mapped to the RFC field.

If the resource allocation request for the same connection is made, the SS records a value of 0 in the RFC field. When resources allocated for the current connection are not changed in the UGS scheme, the value of 0 is recorded in the RFC field. However, special information is not recorded in the piggyback request field.

A base station (BS) retrieves an identifier value recorded in the RFC field mapped to the UGS scheme from the grant management subheader. When the identifier value is set to 1, the BS retrieves information recorded in the piggyback request field mapped to the RFC field. The information recorded in the piggyback request field describes an amount of resources requested from the SS. The BS allocates UL resources, i.e., control traffic resources, for a different connection according to retrieved information.

The SS transmits a desired control message (or UL mgmt message) using the control traffic resources allocated from the BS.

Referring to the above description, a time required to transmit the control message or UL mgmt packet transmission time $D_{mgmt\_tx}$ can be computed using the time $t_{mgmt}$ at which an event occurs and the time at which the control message transmission is completed.

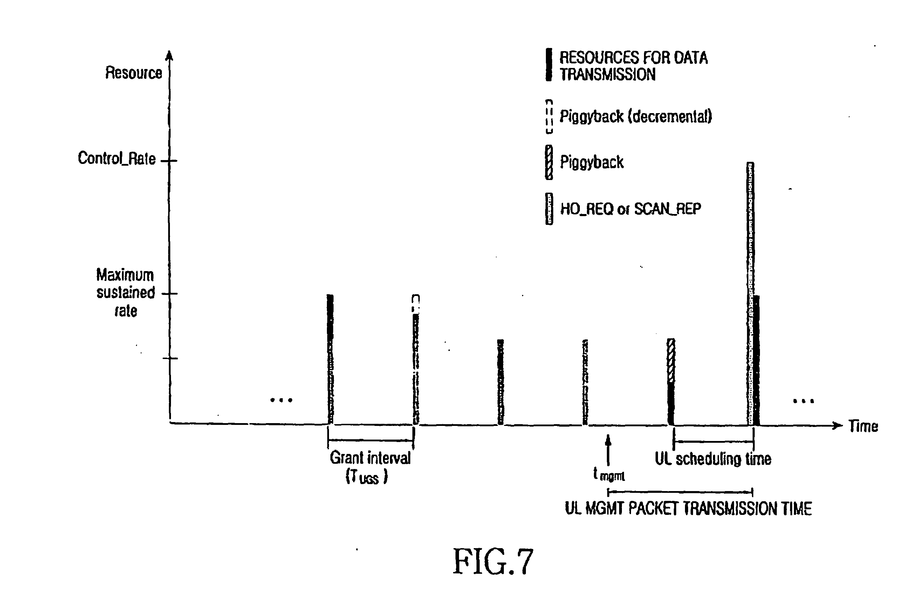

FIG 7 illustrates an example of allocating uplink resources for a control packet transmission in the ertPS scheme in accordance with the present invention. In FIG 7, it is assumed that a time required for allocating resources in response to a resource allocation or BW request of an SS is regular and packet error does not occur.

Referring to FIG 7, the SS transmits a data packet using allocated data traffic resources (or resources allocated for a data packet transmission) at a grant interval $T_{ertPS}$. When an event occurs, the SS makes a resource allocation request for a different connection through a grant management subheader at a first data packet transmission time after an event occurrence time $t_{mgmt}$. A value of 1 is recorded in the RFC field mapped to the ertPS scheme in the grant management subheader. The value of 1 recorded in the RFC field is an identifier for identifying the resource allocation request for the different connection. The SS records information about an amount of resources needed to transmit a control message for the different connection in the piggyback request field mapped to the RFC field.

If the resource allocation request for the same connection is made, the SS records a value of 0 in the RFC field. The SS records information about an amount of resources required for the same connection, i.e., a data packet transmission, in the piggyback request field mapped to the RFC field.

The BS retrieves an identifier value recorded in the RFC field mapped to the ertPS scheme from the grant management subheader. When the identifier value is set to 1, the BS retrieves information recorded in the piggyback request field mapped to the RFC field. The information recorded in the piggyback request field defines an amount of resources requested from the SS. The BS allocates UL resources, i.e., control traffic resources, for the different connection according to retrieved information.

The SS transmits a desired control message (or UL mgmt message) using the control traffic resources allocated from the BS.

Referring to the above description, a time required to transmit the control message or UL mgmt packet transmission time $D_{mgmt\_tx}$ can be computed using the time $t_{mgmt}$ at which an event occurs and the time at which the control message transmission is completed.

When the resource allocation method shown in FIGS. 6 and 7 is applied, an estimated delay time, i.e., a time required to transmit the control message, can be generalized as shown in Equation (1).

$$D_{mgmt\_tx} = t_{next\_data\_tx}\ t_{mgmt\_arrival} + T_{UL\_Scheduling} \qquad \ldots\ldots\ldots (1)$$

Herein, $D_{mgmt\_tx}$ is the time required to transmit the control message from the time at which the event occurs, $t_{next\_data\_tx}$ is the time at which the next data packet is transmitted, $t_{mgmt\_arrival}$ is the time at which the event (or control message) occurs, and $T_{UL\_Scheduling}$ is the time required to allocate UL resources in response to the resource allocation request from the SS.

From Equation (1), it can be seen that the resource allocation method proposed in the present invention can more reduce a resource allocation time compared to that of the conventional UGS scheme. Further, the resource allocation method proposed in the present invention can prevent loss of data traffic resources, which is different from that of the conventional ertPS scheme.

In the above description, the wireless communication system for supporting a real-time service has been considered. When a non-real-time service is supported, a situation in which a fast control message transmission is needed may occur.

When the fast control message transmission situation occurs, the SS can make a resource allocation request for transmitting a control message using the proposed grant management subheader as described above. When the SS using the non-real-time service generates the control message, the value of 1 is recorded in the RFC field for the non-real-time service. If the value of 1 is recorded in the RFC field, it indicates a resource allocation request from the SS using the non-real-time service for the control message transmission.

The SS records information about an amount of resources needed to transmit the control message in the piggyback request field mapped to the RFC field.

The BS retrieves an identifier value recorded in the RFC field for the SS using the non-real-time service from the grant management subheader. When the identifier value is set to 1, the BS retrieves information recorded in the piggyback request field mapped to the RFC field. The BS allocates UL resources needed to transmit the control message according to retrieved information.

The SS transmits a desired control message (or UL mgmt message) using the control traffic resources allocated from the BS.

When the ertPS scheme is applied to the present invention, a data traffic resource change request and a control traffic resource allocation request can be simultaneously generated. The SS can set a processing sequence according to priorities and can process the events according to set processing sequence. For example, if a data packet transmission has a higher priority than a control message transmission, the SS first requests a data traffic resource change through a grant management message. Subsequently, the SS requests control traffic resources for the control message transmission through the grant management message. When two events are simultaneously processed, a new field needs to be added to the grant management subheader as shown in Table 1.

As is apparent from the above description, the present invention can shorten a control message transmission time when a UGS scheme is supported and can transmit a control message in an ertPS scheme without loss of a data packet. Moreover, the present invention can reduce a delay and a failure probability in a handoff procedure.

Although the exemplary embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

## Claims

1. A method for requesting and allocating uplink resources for a subscriber station in a wireless communication system, comprising the steps of:

   transmitting data packets to a base station at a plurality of packet data transmission times; and
   in the event a control message transmission is required, transmitting a grant management subheader to the base station at the first data packet transmission time after the event occurrence time, wherein the grant management subheader includes an identifier identifying a resource allocation request for the control message transmission and information about an amount of desired resources for the control message transmission; and
   receiving control traffic resources allocated from the base station; and
   transmitting the control message using the control traffic resources.

**2.** The method of claim 1, wherein the resource allocation request is for a connection different from a currently connected traffic channel.

**3.** The method of claim 1, wherein when the subscriber station uses a real-time service, the grant management subheader comprises a request for connection (RFC) field for recording the identifier and one of a piggyback request field according to an unsolicited grant service (UGS) scheme and an extended piggyback request field according to an extended real-time polling service (ertPS) scheme for recording the information about the amount of the desired resources for the control message transmission.

**4.** The method of claim 1, wherein when the subscriber station uses a non real-time service, the grant management subheader further comprises a request for connection (RFC) field for recording the identifier and a piggyback request field for recording the information about the amount of the desired resources for the control message transmission.

**5.** A method for allocating uplink resources in a base station of a wireless communication system, comprising the steps of:

retrieving from a grant management subheader an identifier for identifying a resource allocation request for a control message transmission and information about an amount of desired resources for the control message transmission; and

allocating control traffic resources according to the information about the amount of the desired resources; and receiving the control message transmitted using the allocated control traffic resources.

**6.** The method of claim 5, wherein the resource allocation request is for a connection different from a currently connected traffic channel.

**7.** The method of claim 6, wherein when the subscriber station uses a real-time service, the grant management subheader comprises a request for connection (RFC) field for recording the identifier and one of a piggyback request field according to an unsolicited grant service (UGS) scheme and an extended piggyback request field according to an extended real-time polling service (ertPS) scheme for recording the information about the amount of the desired resources for the control message transmission.

**8.** The method of claim 6, wherein when the subscriber station uses a non real-time service, the grant management subheader further comprises a request for connection (RFC) field for recording the identifier and a piggyback request field for recording the information about the amount of the desired resources for the control message transmission.

**Patentansprüche**

**1.** Verfahren zum Anfordern und Zuteilen von Uplink-Ressourcen für eine Teilnehmerstation in einem Drahtloskommunikationssystem, umfassend folgende Schritte:

Senden von Datenpaketen zu einer Basisstation zu einer Vielzahl von Paketdaten-Sendezeitpunkten; und für den Fall, dass eine Steuernachrichtensendung erforderlich ist, Senden eines Gewährverwaltungs-Subheaders zu der Basisstation zu dem ersten Datenpaket-Sendezeitpunkt nach dem Zeitpunkt des Auftretens des Falls, wobei der Gewährverwaltungs-Subheader eine Kennung, die eine Ressourcen-Zuteilungsanforderung für die Steuernachrichtensendung kennzeichnet, und Informationen über einen Umfang gewünschter Ressourcen für die Steuernachrichtensendung enthält; und

Empfangen von Steuerverkehrsressourcen, die von der Basisstation zugeteilt werden; sowie Senden der Steuernachricht unter Verwendung der Steuerverkehrsressourcen.

**2.** Verfahren nach Anspruch 1, bei dem die Ressourcen-Zuteilungsanforderung für eine Verbindung bestimmt ist, die sich von einem momentan aufgebauten Verkehrskanal unterscheidet.

**3.** Verfahren nach Anspruch 1, bei dem, wenn die Teilnehmerstation einen Echtzeitdienst verwendet, der Gewährverwaltungs-Subheader ein Feld einer Anforderung für eine Verbindung (RFC) zum Aufzeichnen der Kennung und ein Huckepack-Anforderungsfeld gemäß einem Schema eines unaufgeforderten Gewährdienstes (UGS) und/oder ein erweitertes Huckepack-Anforderungsfeld gemäß einem Schema eines erweiterten Echtzeitabfragedienstes (ertPS) zum Aufzeichnen der Informationen über den Umfang der gewünschten Ressourcen für die Steuernachrichtensendung enthält.

4. Verfahren nach Anspruch 1, bei dem, wenn die Teilnehmerstation einen Nicht-Echtzeitdienst verwendet, der Gewährverwaltungs-Subheader weiterhin ein Feld einer Anforderung für eine Verbindung (RFC) zum Aufzeichnen der Kennung und ein Huckepack-Anforderungsfeld zum Aufzeichnen der Informationen über den Umfang der gewünschten Ressourcen für die Steuernachrichtensendung enthält.

5. Verfahren zum Zuteilen von Uplink-Ressourcen in einer Basisstation eines Drahtloskommunikationssystems, umfassend folgende Schritte:

Abrufen einer Kennung von einem Gewährverwaltungs-Subheader zum Identifizieren einer Ressourcen-Zuteilungsanforderung für eine Steuernachrichtensendung und Informationen über einen Umfang gewünschter Ressourcen für die Steuernachrichtensendung; und
Zuteilen von Steuerverkehrsressourcen gemäß den Informationen über den Umfang der gewünschten Ressourcen; sowie
Empfangen der Steuernachricht, die mit Hilfe der zugeteilten Steuerverkehrsressourcen gesendet wird.

6. Verfahren nach Anspruch 5, bei dem die Ressourcen-Zuteilungsanforderung für eine Verbindung bestimmt ist, die sich von einem momentan aufgebauten Verkehrskanal unterscheidet.

7. Verfahren nach Anspruch 6, bei dem, wenn die Teilnehmerstration einen Echtzeitdienst verwendet, der Gewährverwaltungs-Subheader ein Feld einer Anforderung für eine Verbindung (RFC) zum Aufzeichnen der Kennung und ein Huckepack-Anforderungsfeld gemäß einem Schema eines unaufgeforderten Gewährdienstes (UGS) und/oder ein erweitertes Huckepack-Anforderungsfeld gemäß einem Schema eines erweiterten Echtzeitabfragedienstes (ertPS) zum Aufzeichnen der Informationen über den Umfang der gewünschten Ressourcen für die Steuernachrichtensendung enthält.

8. Verfahren nach Anspruch 6, bei dem, wenn die Teilnehmerstation einen Nicht-Echtzeitdienst verwendet, der Gewährverwaltungs-Subheader weiterhin ein Feld einer Anforderung für eine Verbindung (RFC) zum Aufzeichnen der Kennung und ein Huckepack-Anforderungsfeld zum Aufzeichnen der Informationen über den Umfang der gewünschten Ressourcen für die Steuernachrichtensendung enthält.

**Revendications**

1. Procédé de demande et d'attribution de ressources de liaison montante pour une station d'abonnés dans un système de communication sans fil, comprenant les étapes consistant à :

- transmettre des paquets de données à une station de base à une pluralité de moments de transmission de données de paquets ;
- dans l'éventualité où la transmission d'un message de commande serait requise, transmettre un sous-en-tête de gestion d'accord à la station de base au premier moment de transmission de paquets de données postérieur au moment où l'éventualité a eu lieu, pour lequel le sous-en-tête de gestion d'accord comprend un identificateur identifiant une demande d'attribution de ressources pour la transmission du message de commande et des informations sur une quantité de ressources voulue pour la transmission du message de commande ;
- recevoir des ressources de trafic de commande attribuées en provenance de la station de base ; et
- transmettre le message de commande en utilisant les ressources de trafic de commande.

2. Procédé selon la revendication 1, pour lequel la demande d'attribution de ressources concerne une connexion différente d'un canal de trafic actuellement connecté.

3. Procédé selon la revendication 1, pour lequel, lorsque la station d'abonnés utilise un service en temps réel, le sous-en-tête de gestion d'accord comprend une demande de champ de connexion (RFC) pour enregistrer l'identificateur et un champ parmi un champ de demande de superposition conforme à un système de service d'accord non sollicité (UGS) et un champ de demande de superposition étendue conforme à un système de service d'appel en temps réel étendu (ertPS) pour enregistrer les informations sur la quantité de ressources voulue pour la transmission du message de commande.

**4.** Procédé selon la revendication 1, pour lequel, lorsque la station d'abonnés utilise un service non en temps réel, le sous-en-tête de gestion d'accord comprend en outre une demande de champ de connexion (RFC) pour enregistrer l'identificateur et un champ de demande de superposition pour enregistrer les informations sur la quantité de ressources voulue pour la transmission du message de commande.

**5.** Procédé d'attribution de ressources de liaison montante dans une station de base d'un système de communication sans fil, comprenant les étapes consistant à :

- extraire d'un sous-en-tête de gestion d'accord un identificateur pour identifier une demande d'attribution de ressources pour la transmission d'un message de commande et des informations sur une quantité de ressources voulue pour la transmission du message de commande ;
- attribuer des ressources de trafic de commande suivant les informations sur la quantité de ressources voulue ; et
- recevoir le message de commande transmis en utilisant les ressources de trafic de commande attribuées.

**6.** Procédé selon la revendication 5, pour lequel la demande d'attribution de ressources concerne une connexion différente d'un canal de trafic actuellement connecté.

**7.** Procédé selon la revendication 6, pour lequel, lorsque la station d'abonnés utilise un service en temps réel, le sous-en-tête de gestion d'accord comprend une demande de champ de connexion (RFC) pour enregistrer l'identificateur et un champ parmi un champ de demande de superposition conforme à un système de service d'accord non sollicité (UGS) et un champ de demande de superposition étendue conforme à un système de service d'appel en temps réel étendu (ertPS) pour enregistrer les informations sur la quantité de ressources voulue pour la transmission du message de commande.

**8.** Procédé selon la revendication 6, pour lequel, lorsque la station d'abonnés utilise un service non en temps réel, le sous-en-tête de gestion d'accord comprend en outre une demande de champ de connexion (RFC) pour enregistrer l'identificateur et un champ de demande de superposition pour enregistrer les informations sur la quantité de ressources voulue pour la transmission du message de commande.

FIG.1

FIG.2

EP 1 784 038 B1

FIG.3

FIG.4

Resource

Control_Rate

Maximum sustained rate

RESOURCES FOR DATA TRANSMISSION

Piggyback (decremental)

BW_REQ (BW stealing)

HO_REQ or SCAN_REP

PACKET LOSS

Grant interval $(T_{UGS})$

$t_{mgmt}$

UL scheduling time

Time

UL MGMT PACKET TRANSMISSION TIME

FIG.5

FIG.6

RESOURCES FOR DATA TRANSMISSION

Piggback

HO_REQ or SCAN_REP

Resource

Control_Rate

Maximum sustained rate

Time

Grant interval (T$_{UGS}$)

$t_{mgmt}$

UL scheduling time

UL MGMT PACKET TRANSMISSION TIME

EP 1 784 038 B1

FIG.7